(19) Europäisches Patentamt
European Patent Office
Office européen des brevets

(11) Publication number: 0 389 067 B1

(12) # EUROPEAN PATENT SPECIFICATION

(45) Date of publication of patent specification: 19.10.94

(51) Int. Cl.5: C09B 69/00, C09B 67/32

(21) Application number: 90201194.9

(22) Date of filing: 18.11.86

(60) Publication number of the earlier application in accordance with Art.76 EPC: 0 223 587

(54) **Ionic dye compounds.**

(30) Priority: 20.11.85 US 800014
06.05.86 US 860367
10.10.86 US 917873

(43) Date of publication of application:
26.09.90 Bulletin 90/39

(45) Publication of the grant of the patent:
19.10.94 Bulletin 94/42

(84) Designated Contracting States:
BE DE FR GB IT NL SE

(56) References cited:
EP-A- 0 040 978
EP-A- 0 109 772
US-A- 3 567 453

CHEMICAL ABSTRACTS, vol. 79, no. 18, 5th November 1973, page 43, abstract no.106114m, Columbus, Ohio, US; G. BANATEANU et al.: "Combinations of thetetraphenylborate ion with basic dyes from the triphenylmethane class"

& BUL. INST. PETROL, GAZE GEOL. 1971, 17(Pt.3-A), 313-18

(73) Proprietor: THE MEAD CORPORATION
Mead World Headquarters
Courthouse Plaza Northeast
Dayton Ohio 45463 (US)

(72) Inventor: Gottschalk, Peter
71 Gershwin Drive
Centerville, Ohio 45459 (US)
Inventor: Neckers, Douglas Carlyle
108 Secor Woods
Perrysburg, Ohio 43551 (US)
Inventor: Schuster, Gary Benjamin
1911 Augusta Drive
Champaign, Illinois 61821 (US)

(74) Representative: Bankes, Stephen Charles Digby et al
BARON & WARREN
18 South End
Kensington
London W8 5BU (GB)



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to cationic dye-borate anion compounds which can be used in photohardenable compositions.

EP-A-0223587, from which the present application is divided, relates to novel photohardenable compositions and to photosensitive materials employing them. More particularly, it relates to free radical addition polymerizable compositions containing an ionic dye-counter ion complex such as a cationic dye-borate anion complex or an anionic dye-iodonium ion complex as a photoinitiator.

U.S. Patents 4,399,209 and 4,440,846 to The Mead Corporation describe imaging materials and imaging processes in which images are formed through exposure controlled release of an image-forming agent from a microcapsule containing a photohardenable composition. The imaging material is exposed image-wise to actinic radiation and subjected to a uniform rupturing force. Typically the image-forming agent is a color precursor which is released image-wise from the microcapsules whereupon it reacts with a developer to form a visible image.

One of the problems which has been encountered in designing commercially acceptable panchromatic, full color imaging materials employing these techniques has been the relatively short wavelengths band to which most photohardenable compositions are sensitive to actinic radiation. In most cases, the compositions are only sensitive to ultraviolet radiation or blue light, e.g., 350 to 480 nm.

Full color photosensitive materials are described in GB-A-2113860 EP-A-164931. These imaging materials include a photosensitive layer which contains three sets of microcapsules. Each set of microcapsules is sensitive to a different band of radiation in the ultraviolet or blue spectrum and contains a cyan, magenta or yellow image-forming agent. The absorption spectra of the initiators employed in these microcapsules are never perfectly distinct. There is always some degree of overlap in the absorption curves and sometimes it is substantial. Exposure conditions therefore must be controlled carefully to avoid cross-exposure.

It would be desirable to extend the sensitivity of the photohardenable compositions used in these imaging materials to longer wavelengths. By extending the sensitivity of the photohardenable compositions to longer wavelengths, the amount of overlap in the absorption spectra of the initiators and the concommitant incidence of cross-exposure can be reduced. It would be particularly desirable if compositions could be designed with sensitivities to selected wavelength bands throughout the visible spectrum (400 to 700 nm) since this would provide a visible light-sensitive material which could be exposed by direct reflection or transmission imaging and without image processing.

EP-A-0 040 978 and 0 109 772 disclose light-sensitive imaging systems comprising a tetra-(hydrocarbyl) borate and a bleachable dye such as indolenine red. The tetra(hydrocarbyl) borate is generally in the form of an alkali metal salt or a complex with a quaternary cation such as ammonium. When this two-component system absorbs radiation the dye is bleached to form a positive image.

It has been found that ionic dye-counter ion compounds, such as cationic dye-borate anion compounds are useful photoinitiators of free radical addition reactions. Such compounds consist of a visible light absorber (the ionic dye) ionically bonded to a reactive counter ion. The counter ion is reactive in the sense that upon excitation of the dye the counter ion donates an electron to or accepts an electron from the excited dye. This electron transfer process generates radicals capable of initiating polymerization of a monomer.

Accordingly the present invention consists in a cationic dye-borate anion compound represented by the formula (I):

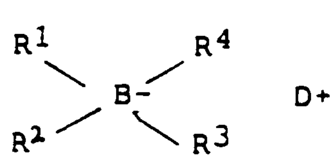

(I)

where D is a cationic dye moiety; $R^1$ is an alkyl group and $R^2$, $R^3$, and $R^4$ are aryl groups. The dye is preferably a cyanine dye.

The mechanism whereby the compounds of the invention absorb energy and generate free radicals is not entirely clear. It is believed that upon exposure to actinic radiation, the dye ion is excited to a singlet state in which it accepts an electron from or donates an electron to the counter ion. For a cationic dye-borate anion compound, this can be illustrated by the following equation:

$BR_4^- D^+ \rightarrow D + BR_4$ (Eq. 1)

The lifetime of the dye singlet state is extremely short by comparison to the lifetime of the triplet state. The quenching rate constants which have been observed suggest that the ionic compounds experience a very efficient electron transfer via the singlet state. In solution in the polymerizable compound, tight ionic pairing of the counter ion and the dye is believed to provide favourable spatial distribution promoting electron transfer to such an extent that the transfer occurs even though the lifetime of the singlet state is very short. Of course, this does not mean that electron transfer is restricted to the singlet state. Ionic dyes which have significant populations of triplet state may undergo electron transfer through the singlet state, triplet state, or both singlet and triplet states.

Upon transfer of the electron, a radical is formed. The ionic compounds used as initiators in the present invention do not appear to exhibit back electron transfer. It is believed that following electron transfer, the dye and counter ion become disassociated such that back electron transfer does not occur.

The ionic compounds used in the present invention are different than the collision generated species encountered in other photosensitive systems such as collision complexes which yield encounter complexes, exciplexes and/or contact ion pairs. See for example, Kavarnos, George J. and Turro, Nicholas J., "Photosensitization by Reversible Electron Transfer", Chem. Rev. 1986, 401-449.

In accordance with the present invention the ionic dye and the counter ion are present in the photopolymerizable composition as a stable, non-transient compound, and not as a dissociated ion pair. Formation of the compound is not dependent upon diffusion and collision. As distinguished from photographic materials and compositions containing collision dependent complexes essentially all of the sensitizing dye present in the photosensitive materials of the present invention prior to exposure is ionically bonded to the the counter ion.

The ionic compounds used as initiators in the present invention can also be characterized in that they are soluble in nonpolar solvents such as TMPTA and the like. They are soluble in an amount of at least about 0.1% and perferably at least about 0.3%. While these amounts are not large, they are substantial considering the normally lower solublity of ionic materials in polar solvents. While the compounds are soluble, the dye and the counter ion do not dissociate in solution. They remain ionically bonded to each other.

In dye-sensitized photopolymerizable compositions, visible light is absorbed by a dye having a comparable absorption band, the dye is raised to its excited electronic state, the lifetime of which may be $10^{-9}$ to $10^{-3}$ second, depending upon the nature (singlet or triplet) of the excited state. During this time, absorbed energy in the form of an electron must be transferred to or from the dye molecule to produce the free radical. In prior initiator systems, this transfer is diffusion controlled. The excited dye must interact (collide) with another molecule in the composition which quenches the dye and generates a free radical. In the present invention, the transfer is not diffusion (collision) controlled. Electron transfer occurs at greater than diffusion controlled rates. In terms of Stern-Volmer kinetics, this means the quenching constant (Kq) of the excited dye is greater than $10^{10}$ and, more particularly, greater than $10^{12}$ have been observed for the ionic compounds. At these rates, electron transfer can occur through the singlet state.

Thus, the present invention provides a means for generating free radicals from the excited state of an ionic dye and insodoing provides photohardenable compositions which are sensitive at longer wavelengths.

One of the particular advantages of using ionic dye-counter ion compounds as initiators of free radical addition reactions is the ability to select from a wide variety of dyes which absorb at substantially different wavelengths. The absorption characteristics of the compound are principally determined by the dye. Thus, by selecting a dye which absorbs at 400 nm or greater, the sensitivity of the photosensitive material can be extended well into the visible range. Furthermore, compounds can be selected which are respectively sensitive to red, green and blue light without substantial cross-talk.

The ionic dye-counter ion compounds are particularly useful in providing full color photosensitive materials. In these materials, a layer including three sets of microcapsules having distinct sensitivity characteristics is provided on a support. Each set of microcapsules respectively contains a cyan, magenta, and yellow color-forming agent.

The absorption characteristics of the three sets of microcapsules in a full color photosensitive material must be sufficiently different that the cyan-forming capsules can be differentially hardened at a predetermined wavelength or over a predetermined wavelength range without hardening the magenta or yellow-forming capsules and, likewise, the magenta-forming and yellow-forming capsules can be selectively hardened upon exposure respectively to second and third wavelengths without hardening the cyan-forming capsules or hardening the other of the yellow-forming or magenta-forming capsules. Microcapsules having

this characteristic (i.e., cyan-, magenta- and yellow-forming capsules which can be selectively hardened by exposure at distinct wavelengths without cross-exposure) are referred to herein as having "distinctly different sensitivities."

As indicated above, because most photohardenable compositions are sensitive to ultraviolet radiation or blue light and they tend not to be sensitive to wavelengths greater than about 480 nm, it has been difficult to achieve microcapsules having distinct sensitivities at three wavelengths. Often it can only be achieved by carefully adjusting the exposure amounts so as not to cross-expose the capsules.

The present invention facilitates the achievement of distinct sensitivities by shifting the peak absorption of at least one of the initiators to higher wavelengths, such as wavelengths greater than about 400 nm. In this manner, instead of attempting to establish distinct sensitivities at three wavelengths within the narrow wavelength range of, for example, 350 nm to 480 nm, sensitivity can be established over a broader range of, for example, 350 to 550 nm or higher. In accordance with the invention, the sensitivity of the microcapsules can be extended well into the visible spectrum to 600 nm and in some cases to about 700 nm. In the preferred case compounds are provided which are respectively sensitive to red, green and blue light.

A principal advantage of the present invention is so that it can to provide photohardenable compositions which are sensitive to visible light, e.g., wavelengths greater than about 400 nm. Such compositions are useful in the imaging materials described in U.S. Patents 4,399,209 and 4,440,846, and as photoresists or in forming polymer images.

The ionic dye-counter ion compounds of the present invention can be used to provide a photosensitive material comprising a support having a layer of photosensitive microcapsules on the surface thereof, said microcapsules containing an internal phase including a photohardenable composition comprising a free radical addition polymerizable or crosslinkable compound and the ionic dye-counter ion compound.

The compounds of the present invention can also be used to provide a photosensitive material useful in forming full color images comprising a support having a layer of photosensitive microcapsules on the surface thereof, said photosensitive microcapsules comprising a first set of microcapsules having a cyan image-forming agent associated therewith, a second set of microcapsules having a magenta image-forming agent associated therewith, and a third set of microcapsules having a yellow image-forming agent associated therewith, at least one of said first, second, and third sets of microcapsules containing an internal phase which includes a photohardenable composition including a free radical addition polymerizable or crosslinkable compound and the ionic dye-counter ion compound.

The compounds of the present invention can also be used to provide a photosensitive material comprising a support having a layer of a photohardenable composition on the surface thereof, said photohardenable composition comprising a free radical addition polymerizable or crosslinkable compound and an ionic dye-counter ion compound which provides a quenching constant (Kq) which is greater than $10^{10}$ and preferably greater than $10^{12}$. Cationic dye-borate anion compounds are known in the art. Their preparation and use in imaging systems is described in U.S. Patents 3,567,453; 4,307,182; 4,343,891; 4,447,521; and 4,450,227.

Useful dyes form photoreducible but dark stable complexes with borate anions and can be cationic methine, polymethine, triarylmethane, indoline, thiazine, xanthene, oxazine and acridine dyes. More specifically, the dyes may be cationic cyanine, carbocyanine, hemicyanine, rhodamine and azomethine dyes. In addition to being cationic, the dyes should not contain groups which would neturalize or desensitize the complex or render the complex poorly dark stable. Examples of groups which generally should not be present in the dye are acid groups such as free carboxylic or sulphonic acid groups.

Specific examples of useful cationic dyes are Methylene Blue, Safranine O, Malachite Green, cyanine dyes of the general formula (II) and rhodamine dyes of the formula (III):

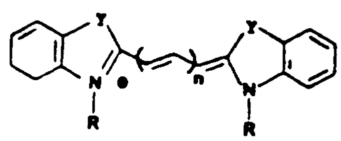

(II)

n = 0, 1, 2, 3,
R = alkyl
Y = CH=CH, N-$CH_3$, $C(CH_3)_2$, O, S, Se

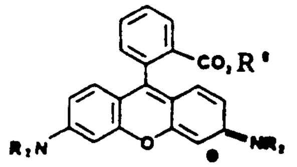

(III)

R', R = alkyl, aryl, and any combination thereof

While they have not been tested, the cationic cyanine dyes disclosed in U.S. Patent 3,495,987 should be useful in the present invention.

The borate anion is designed such that the borate radical generated upon exposure to light and after electron transfer to the dye (Eq. 1) readily dissociates with the formation of a radical as follows:

$$BR_4^{\cdot} \longrightarrow BR_3 + R^{\cdot} \qquad (Eq.\ 2)$$

For example particularly preferred anions are triphenylbutylborate and trianisylbutylborate anions because they readily dissociate to triphenylborane or trianisylborane and a butyl radical. On the other hand tetrabutylborate anion does not work well presumably because the tetrabutylborate radical is not stable and it readily accepts an electron back from the dye in a back electron transfer and does not dissociate efficiently. Likewise, tetraphenylborate anion is very poor because the phenyl radical is not easily formed.

The alkyl group $R^1$ in the compounds of the invention can contain up to 20 carbon atoms, and typically 1 to 7 carbon atoms.

Representative examples of alkyl groups represented by $R^1$ are methyl, ethyl, propyl, butyl, pentyl, hexyl, octyl, stearyl, etc. The alkyl groups may be substituted, for example, by one or more halogen, cyano, acyloxy, acyl, alkoxy or hydroxy groups.

Representative examples of aryl groups represented by $R^2$-$R^4$ include phenyl, naphthyl and substituted aryl groups such as anisyl.

As a general rule, useful ionic dye compounds must be identified empirically, however, potentially useful dye and counter ion combinations can be identified by reference to the Weller equa- tion (Rehm, D. and Weller, A., Isr. J Chem. (1970), 8, 259-271), which can be simplified as follows.

$\Delta G = E_{ox}-E_{red}-E_{h\nu}$ (Eq. 3)

where G is the change in the Gibbs free energy, $E_{ox}$ is the oxidation potential of the borate anion $BR_4^-$ , $E_{red}$ is the reduction potential of the cationic dye, and $E_{h\nu}$ is the energy of light used to excite the dye.

Useful compounds will have a negative free energy change. Similarly, the difference between the reduction potential of the dye and the oxidation potential of the borate must be negative for the compounds to be dark stable, i.e., Eox - Ered > O.

As indicated, Eq. 3 is a simplification and it does not absolutely predict whether a compound will be useful in the present invention or not. There are a number of other factors which will influence this determination. One such factor is the effect of the monomer on the complex. Another factor is the radial distance between the ions. It is also known that if the Weller equation produces too negative a value, deviations from the equation are possible. Furthermore, the Weller equation only predicts electron transfer, it does not predict whether a particular dye complex is an efficient initiator of polymerization. The equation is a useful first approximation.

Specific examples of cationic dye-borate anion compounds useful in the present invention are shown in the following table with their λ max.

Table

| Compound No. | Structure | λ Max (TMPTA) |
|---|---|---|
| 1. | 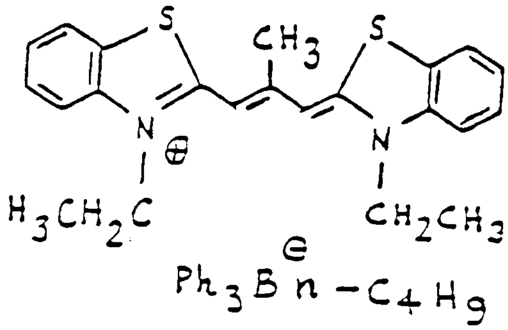 | 552 nm |
| 2. | 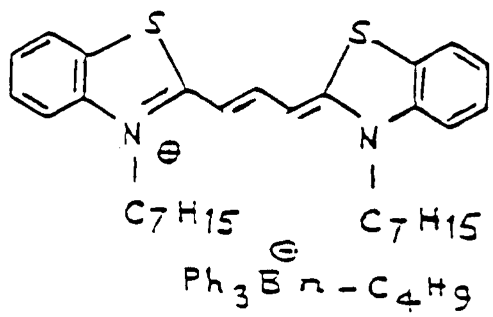 | 568 nm |
| 3. | 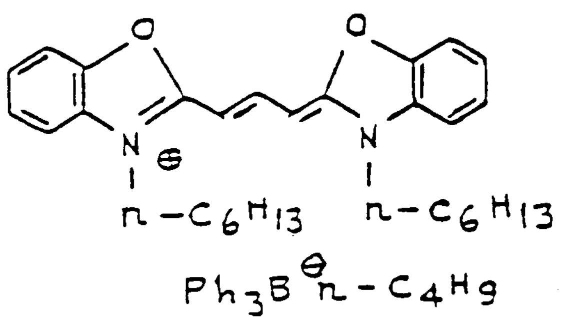 | 492 nm |

Table (cont.)

| Compound No. | Structure | λmax (TMPTA) |
|---|---|---|
| 4. | 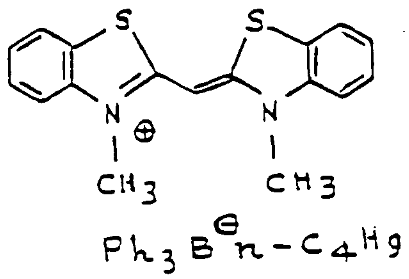 | 428 nm |
| 5. | 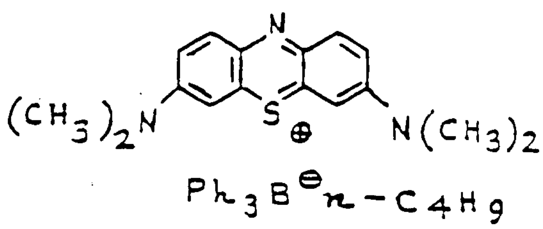 | 658 nm |
| 6. | 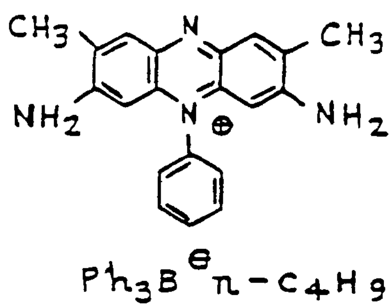 | 528 nm |

7.

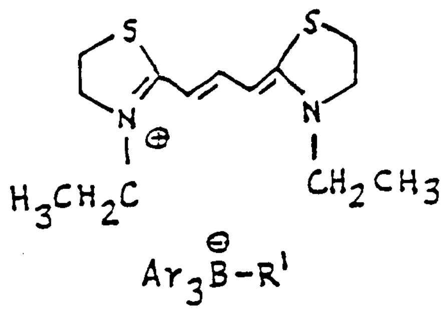

450nm

| No. | R' | Ar |
|---|---|---|
| 7A | n-butyl | phenyl |
| 7B | n-hexyl | phenyl |
| 7C | n-butyl | anisyl |

8.

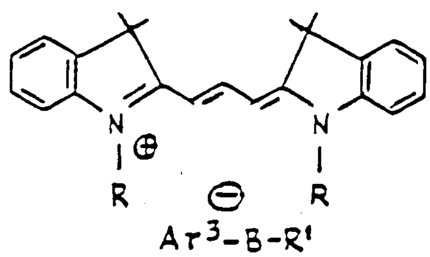

550nm

| No. | R' | R | Ar |
|---|---|---|---|
| 8A | methyl | n-butyl | phenyl |
| 8B | methyl | n-hexyl | phenyl |
| 8C | n-butyl | n-butyl | phenyl |
| 8D | n-butyl | n-hexyl | phenyl |
| 8E | n-heptyl | n-butyl | phenyl |
| 8F | n-heptyl | n-hexyl | phenyl |
| 8G | ethyl | n-butyl | phenyl |

9. 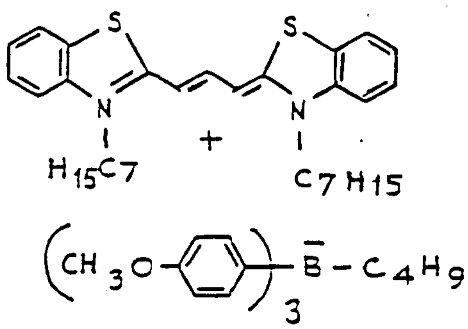 570 nm System

10. 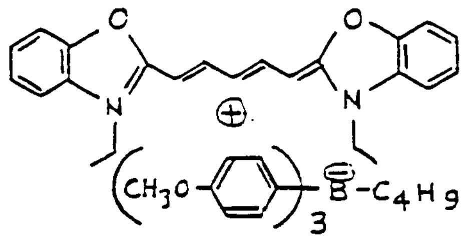 590 nm System

11. 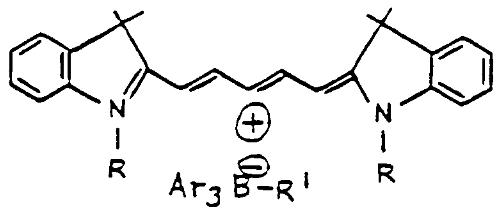 640nm

| No. | R | R' | Ar |
|---|---|---|---|
| 11A | methyl | n-butyl | phenyl |
| 11B | methyl | n-hexyl | phenyl |
| 11C | n-butyl | n-butyl | phenyl |
| 11D | n-butyl | n-hexyl | phenyl |
| 11E | n-pentyl | n-butyl | phenyl |
| 11F | n-pentyl | n-hexyl | phenyl |
| 11G | n-heptyl | n-butyl | phenyl |
| 11H | n-heptyl | n-hexyl | phenyl |
| 11I | methyl | n-butyl | anisyl |

12. 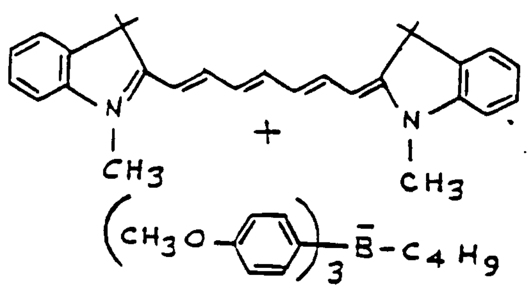 740 nm System

The cationic dye-borate anion compounds can be prepared by reacting a borate salt with a dye in a counterion exchange in a known manner. See Hishiki, Y., Repts. Sci. Research Inst. (1953), 29, pp 72-79. Useful borate salts are sodium salts such as sodium tetraphenylborate, sodium triphenylbutylborate, sodium trianisylbutylborate and ammonium salts such as tetraethylammonium tetraphenylborate.

The most typical examples of a free radical addition polymerizable or crosslinkable compound with which the compounds of the present invention can be used is an ethylenically unsaturated compound and, more specifically, a polyethylenically unsaturated compound. These compounds include both monomers having one or more ethylenically unsaturated groups, such as vinyl or allyl groups, and polymers having terminal or pendant ethylenic unsaturation. Such compounds are well known in the art and include acrylic and methacrylic esters of polyhydric alcohols such as trimethylolpropane, pentaerythritol, and acrylate or methacrylate terminated epoxy resins, acrylate or methacrylate terminated polyesters. Representative examples include ethylene glycol diacrylate, ethylene glycol dimethacrylate, trimethylolpropane triacrylate (TMPTA), pentaerythritol tetraacrylate, pentaerythritol tetramethacrylate, dipentaerythritol hydroxypentacrylate (DPHPA), hexanediol-1,6-dimethacrylate, and diethyleneglycol dimethacrylate.

The ionic dye compound is usually used in an amount up to 1% by weight based on the weight of the photopolymerizable or crosslinkable species in the photohardenable composition. More typically, the compound is used in an amount of 0.2% to 0.5% by weight.

While the compound can be used alone as the initiator, film speeds tend to be quite low and oxygen inhibition is observed. It has been found that it is preferable to use the compound in combination with an autoxidizer. An autoxidizer is a compound which is capable of consuming oxygen in a free radical chain process.

Examples of useful autoxidizers are N,N-dialkylanilines. Examples of preferred N,N-dialkylanilines are dialkylanilines substituted in one or more of the ortho-, meta-, or para- position by the following groups: methyl, ethyl, isopropyl, t-butyl, 3,4-tetramethylene, phenyl, trifluoromethyl, acetyl, ethoxycarbonyl, carboxy, carboxylate, trimethylsilymethyl, trimethylsilyl, triethylsilyl, trimethylgermanyl, triethylgermanyl, trimethylstannyl, triethylstannyl, n-butoxy, n-pentyloxy, phenoxy, hydroxy, acetyl-oxy, methylthio, ethylthio, isopropylthio, thio-(mercapto-), acetylthio, fluoro, chloro, bromo and iodo.

Representative examples of N,N-dialkylanilines useful in the present invention are 4-cyano-N, N-dimethylaniline, 4-acetyl-N,N-dimethylaniline, 4-bromo-N, N-dimethylaniline, ethyl 4-(N,N-dimethylamino) benzoate, 3-chloro-N,N-dimethylaniline, 4-chloro-N,N-dimethylaniline, 3-ethoxy-N,N-dimethylaniline, 4-fluoro-N,N-dimethylaniline, 4-methyl-N,N-dimethylaniline, 4-ethoxy-N,N-dimethylaniline, N,N-dimethylthioanicidine, 4-amino- N,N-dimethylaniline, 3-hydroxy-N,N-dimethylaniline, N,N,N′,N′-tetramethyl-1,4-dianiline, 4-acetamido-N, N-dimethylaniline.

Preferred N,N-dialkylanilines are substituted with an alkyl group in the ortho-position and include 2,6-diisopropyl-N,N-dimethylaniline,2,6-diethyl-N,N-dimethylaniline, N,N,2,4,6-pentamethylaniline (PMA) and p-t-butyl-N,N-dimethylaniline.

The autoxidizers are preferably used in the present invention in concentrations of about 4-5% by weight.

The photohardenable compositions of the present invention can be coated upon a support in a conventional manner and used as a photoresist or in photolithography to form a polymer image; or they can be encapsulated as described in U.S. Patents 4,399,209 and 4,440,846 and used to control the release of an image-forming agent. The latter processes typically involve image-wise exposing the photosensitive material to actinic radiation and subjecting the layer of microcapsules to a uniform rupturing force such as pressure, abrasion, or ultrasonic energy whereupon the image-forming agent is released from the microcapsules for reaction with a developer.

Several processes can be used to form color images as explained in GB-A-2113860 If the microcapsules contain photosensitive compositions which are sensitive to red, green and blue light, images can be formed by direct transmission or reflection imaging or by image processing. Image processing may involve forming color separations (color-seps) corresponding to the red, green and blue component images and sequentially exposing the photosensitive material to three distinct bands of radiation hereinafter designated λ-1, λ-2, and λ-3 through each color separation. Otherwise, it may involve electronic processing in which the image or subject to be recorded is viewed through a Dunn or matrix camera and the output from the camera electronically drives three exposure sources corresponding to λ-1, λ-2, and λ-3. Alternatively, the image may be produced synthetically, e.g., a computer-generated image.

While the discussion herein relates to forming 3-color full color images, 4-color images are also possible. For example, microcapsules containing cyan, magneta, yellow, and black image-forming agents can be provided which have distinct sensitivities at four wavelengths, e.g., λ-1, λ-2, λ-3, and λ-4.

In accordance with the invention, at least one set of the microcapsules in a full color system contains an ionic dye compound. The other sets also may contain an ionic dye compound, or they may contain a different type of photoinitiator.

In accordance with the preferred embodiments of the invention, a full color imaging system is provided in which the microcapsules are sensitive to red, green, and blue light respectively. The photosensitive

composition in at least one and possibly all three microcapsules are sensitized by an ionic dye compound. For optimum color balance, the microcapsules are sensitive (λmax) at about 450 nm, 550 nm, and 650 mn, respectively. Such a system is useful with visible light sources in direct transmission or reflection imaging. Such a material is useful in making contact prints or projected prints of color photographic slides. They are also useful in electronic imaging using lasers or pencil light sources of appropriate wavelengths.

Because the ionic dye compounds absorb at wavelengths greater than 400 nm, they are colored. Typically, the unexposed dye compound is present with the image-forming agent in the image areas and, thus, the color of the compound must be considered in determining the color of the image. However, the compound is used in very small amounts compared to the image-forming agent and exposure sometimes bleaches the compound.

The photohardenable compositions of the present invention can be encapsulated in various wall formers using techniques known in the area of carbonless paper including coacervation, interfacial polymerization, polymerization of one or more monomers in an oil, as well as various melting, dispersing, and cooling methods. To achieve maximum sensitivities, it is important that an encapsulation technique be used which provides high quality capsules which are responsive to changes in the internal phase viscosity in terms of their ability to rupture. Because the borate tends to be acid sensitive, encapsulation procedures conducted at higher pH (e.g., greater than about 6) are preferred.

Oil soluble materials have been encapsulated in hydrophilic wall-forming materials such as gelatin-type materials (see U.S. Patent Nos. 2,730,456 and 2,800,457 to Green et al) including gum arabic, polyvinyl alcohol, carboxy-methylcellulose; resorcinol-formaldehyde wall formers (see U.S. Patent No. 3,755,190 to Hart, et al); isocyanate wall-formers (see U.S. Patent No. 3,914,511 to Vassiliades); isocyanate-polyol wall-formers (see U.S. Patent No. 3,796,669 to Kirintani et al); urea-formaldehyde wall-formers, particularly urea-resorcinol-formaldehyde in which oleophilicity is enhanced by the addition of resorcinol (see U.S. Patent Nos. 4,001,140; 4,087,376 and 4,089,802 to Foris et al); and melamine-formaldehyde resin and hydroxypropyl cellulose (see commonly assigned U.S. Patent No. 4,025,455 to Shackle).

Urea-resorcinol-formaldehyde and melamine-formaldehyde capsules with low oxygen permeability are preferred. In some cases to reduce oxygen permeability it is desirable to form a double walled capsule by conducting encapsulation in two stages.

A capsule size should be selected which minimizes light attenuation. The mean diameter of the capsules used in this invention typically ranges from approximately 1 to 25 µm. As a general rule, image resolution improves as the capsule size decreases. If the capsules become too small, they may become inaccessible in the pores or the fiber of the substrate. These very small capsules may therefore be screened from exposure by the substrate. They may also fail to rupture when exposed to pressure or other rupturing means. In view of these problems, it has been determined that a preferred mean capsule diameter range is from approximately 10 µm. Technically, however, the capsules can range in size up to the point where they become visible to the human eye.

An open phase system may also be used in accordance with the invention instead of an encapsulated one. This can be done by dispersing what would otherwise be the capsule contents throughout the coating on the substrate as discrete droplets. Suitable coatings for this embodiment include polymer binders whose viscosity has been adjusted to match the dispersion required in the coating. Suitable binders are gelatin, polyvinyl alcohol, polyacrylamide, and acrylic lattices. Whenever reference is made to "capsules" and "encapsulation" without reference to a discrete capsule wall in this specification or the appended claims, those terms are intended to include the alternative of an open phase system.

The photosensitive material of the present invention can be used to control the interaction of various image-forming agents.

In one embodiment of the present invention the capsules may contain a benign visible dye in the internal phase in which case images are formed by contacting the exposed imaging material under pressure with a plain paper or a paper treated to enhance its affinity for the visible dye. A benign dye is a colored dye which does not interfere with the imaging photochemistry, for example, by relaxing the excited state of the initiator or detrimentally absorbing or attenuating the exposure radiation.

In a preferred embodiment of the invention, images are formed through the reaction of a pair of chromogenic materials such as a color precursor and a color developer, either of which may be encapsulated with the photohardenable composition and function as the image forming agent. In general, these materials include colorless electron donating type compounds and are well known in the art. Representative examples of such color formers include substantially colorless compounds having in their partial skeleton a lactone, a lactam, a sultone, a spiropyran, an ester or an amido structure such as triarylmethane compounds, bisphenylmethane compounds, xanthene compounds, fluorans, thiazine compounds, and spiropyran compounds. Crystal Violet Lactone and Copikem® X, IV and XI are often used. The

color formers can be used alone or in combination.

The developer materials conventionally employed in carbonless paper technology are also useful in the present invention. Illustrative examples are clay minerals such as acid clay, active clay and attapulgite; organic acids such as tannic acid, gallic acid, propyl gallate, etc.; acid polymers such as phenol-formaldehyde resins, phenol acetylene condensation resins, condensates between an organic carboxylic acid having at least one hydroxy group and formaldehyde; metal salts or aromatic carboxylic acids such as zinc salicylate, tin salicylate, zinc 2-hydroxy naphthoate, zinc 3,5 di-tert butyl salicylate, zinc 3,5-di-(α-methylbenzyl)salicylate, oil soluble metal salts or phenol-formaldehyde novolak resins (e.g., see U.S. Patent Nos. 3,672,935; 3,732,120 and 3,737,410) such as zinc modified oil soluble phenol-formaldehyde resin as disclosed in U.S. Patent No. 3,732,120, zinc carbonate etc. and mixtures thereof.

As indicated in U.S. Patents 4,399,209 and 4,440,846, the developer may be present on the photo-sensitive sheet (providing a so-called self-contained system) or on a separate developer sheet.

In self-contained systems, the developer may be provided in a single layer underlying the microcapsules as disclosed in U.S. Patent No. 4,440,846. Alternatively, the color former and the color developer may be individually encapsulated in photosensitive capsules and upon exposure both capsule sets image-wise rupture releasing color former and developer which mix to form the image. Alternatively, the developer can be encapsulated in non-photosensitive capsules such that upon processing all developer capsules rupture and release developer but the color former containing capsules rupture in only the unexposed or under-exposed area which are the only areas where the color former and developer mix. Still another alternative is to encapsulate the developer in photosensitive capsules and the color former in non-photosensitive capsules.

The present invention is not necessarily limited to embodiments where the image-forming agent is present in the internal phase. Rather, this agent may be present in the capsule wall of a discrete capsule or in the binder of an open phase system or in a binder or coating used in combination with discrete capsules or an open phase system designed such that the image-wise ruptured capsules release a solvent for the image-forming agent. Embodiments are also envisioned in which a dye or chromogenic material is fixed in a capsule wall or binder and is released by interaction with the internal phase upon rupturing the capsules.

The most common substrate for this invention is a transparent film since it assist in obtaining uniform development characteristics, however, paper may also be used. The paper may be a commercial impact raw stock, or special grade paper such as cast-coated paper or chrome-rolled paper. Transparent films such as polyethylene terephthalate can be used. Translucent substrates can also be used in this invention.

Synthesis Examples 1 and 2 respectively illustrate the preparation of borates and dye-borate compounds.

## SYNTHESIS EXAMPLE 1

Dissolve triphenylborane in 150 ml dry benzene (1M) under nitrogen atmosphere. Place flask in a cool water bath and, while stirring, add n-BuLi, (1.1 eg.) via syringe. A white precipitate soon formed after addition was started. Stirring is continued about 45-60 min. Dilute with 100 ml hexane and filter, washing with hexane. This resultant Li salt is slightly air unstable. Dissolve the white powder in about 200 ml distilled water and, with vigorous stirring, add aqueous solution of tetramethyl ammonium chloride (1.2 eg. of theoretical in 200 ml). A thick white precipitate forms. Stir this aqueous mixture about 30 min. at room temperature, then filter. Wash collected white solid with distilled water.

As an alternative synthesis, to a 1.0M solution of 2.0 equivalents of 1-butene in dry, oxygen-free dichloromethane, under inert atomosphere, was added slowly dropwise with stirring, 1.0 equivalents of a 1.0M solution of dibromethane-methylsulfide complex in dichloromethane. The reaction mixture stirred at reflux for 36 hours and the dichloromethane and excess 1-butene were removed by simple distillation. Vacuum distillation of the residue afforded 0.95 equivalents of a colorless mobile oil (Bp 66-7 46.7 Pa (0.35 mm Hg), "BNMR;bs (4.83PPM). Under inert atmosphere, this oil was dissolved in dry, oxygen-free tetrahydrofuran to give a 1.0M solution and 3.0 equivalents of a 2.0M solution of phenylmagnesium chloride in tetrahydrofuran were added dropwise with stirring. After stirring 16 hours, the resultant solution was added slowly with vigorous stirring to 2 equivalents of tetramethylammonium chloride, as a 0.2 M solution, in water. The resulting white flocculate solid was filtered and dried to afford a near quantitative amount of the desired product Mp 250-2 ° C, "BNMR;bs (-3.70PPM).

SYNTHESIS EXAMPLE 2

Sonicate a suspension of a borate salt (1 g/10 ml) in MeOH, to make a very fine suspension. Protect flask from light by wrapping with aluminum foil then add 1 equivalent of dye. Stir this solution with low heat on a hot plate for about 30 min. Let cool to room temperature then dilute with 5-10 volumes of ice water. Filter the resultant solid and wash with water until washings are colorless. Suction filter to dryness. Completely dry initiator compound by low heat (about 50 °C) in a vacuum drying oven. Initiator is usually formed quantitatively. Analysis by H-NMR indicates 1:1 compound formation typically greater than 90%.

The present invention is illustrated in more detail by the following non-limiting Examples.

Example 1

Capsule Preparation

1. Into a 600 ml stainless steel beaker, 104 g water and 24.8 g isobutylene maleic anhydride copolymer (18%) are weighed.
2. The beaker is clamped in place on a hot plate under an overhead mixer. A six-bladed, 45° pitch, turbine impeller is used on the mixer.
3. After thoroughly mixing, 3.1 g pectin (polygalacturonic acid methyl ester) is slowly sifted into the beaker. This mixture is stirred for 20 minutes.
4. The pH is adjusted to 4.0 using a 20% solution of $H_2SO_4$, and 0.1 g Quadrol® (2-hydroxypropyl ethylenediamine with propylene oxide from BASF) is added.
5. The mixer is turned up to 3000 rpm and the internal phase is added over a period of 10-15 seconds. Emulsification is continued for 10 minutes.
6. At the start of emulsification, the hot plate is turned up so heating continues during emulsification.
7. After 10 minutes, the mixing speed is reduced to 2000 rpm and 14.1 g urea solution (50% w/w), 3.2 g resorcinol in 5 g water, 21.4 g formaldehyde (37%), and 0.6 g ammonium sulfate in 10 ml water are added at two-minute intervals.
8. The beaker is covered with foil and a heat gun is used to help bring the temperature of the preparation to 65 °C. When 65 °C is reached, the hot plate is adjusted to maintain this temperature for a two to three hour cure time during which the capsule walls are formed.
9. After curing, the heat is turned off and the pH is adjusted to 9.0 using a 20% NaOH solution.
10. Dry sodium bisulfite (2.8 g) is added and the capsule preparation is cooled to room temperature.

Three batches of microcapsules were prepared for use in a full color imaging sheet using the three internal phase compositions set forth below. Internal Phase A provides a yellow image-forming agent and is sensitive at 420 nm, Phase B provides a magenta image-forming agent and is sensitive at 480 nm, and Phase C contains a cyan image-forming agent and a cationic dye-borate anion complex which is sensitive at 570 nm. The three batches of microcapsules were mixed, coated on a support, and dried to provide a full color imaging sheet.

| Internal Phase A (420 nm) | |
|---|---|
| TMPTA | 35 g |
| DPHPA | 15 g |
| 3-Thenoyl-7-diethylamino coumarin | 15 g |
| 2-Mercaptobenzoxazole (MBO) | 2.0 g |
| Pentamethylaniline (PMA) | 1.0 g |
| Reakt Yellow (BASF) | 5.0 g |
| SF-50 (Union Carbide Isocyanate) | 1.67 g |
| N-100(Desmodur® Polyisocyanate Resin) | 3.33 g |

| Internal Phase B (480 nm) | |
|---|---|
| TMPTA | 35 g |
| DPHPA | 15 g |
| 9-(4′-Isopropylcinnamoyl)-1,2,4-tetrahydro-3H, 6H, 10H[1]benzopyrano[9, 9A,1-yl]quinolazine-10-one | 0.15 g |
| MBO | 1.0 g |
| PMA | 2.0 g |
| Magenta Color Former (HD-5100 Hilton Davis Chemical Co) | 8.0 g |
| SF-50 | 1.67 g |
| N-100 | 3.33 g |

| Internal Phase C (570 nm) | |
|---|---|
| TMPTA | 50 g |
| Cationic Dye Compound No. 2 | 0.15 g |
| PMA | 2.0 g |
| Cyan Color Former (S-29663 Hilton Davis Chemical Co.) | 4.0 g |
| SF-50 | 1.67 g |
| N-100 | 3.33 g |

Example 2

Capsule Preparation

1. Into a 600 ml stainless steel beaker, 110 g water and 4.6 g isobutylene maleic anhydride copolymer (dry) are weighed.
2. The beaker is clamped in place on a hot plate under an overhead mixer. A six-bladed, 45° pitch, turbine impeller is used on the mixer.
3. After thoroughly mixing, 4.0 g pectin (polygalacturonic acid methyl ester) is slowly sifted into the beaker. This mixture is stirred for 2 hours at room temperature (800-1200 rpm).
4. The pH is adjusted to 7.0 with 20% sulfuric acid.
5. The mixer is turned up to 3000 rpm and the internal phase is added over a period of 10-15 seconds. Emulsification is continued for 10 minutes. Magenta and yellow precursor phases are emulsified at 25-30°C Cyan phase is emulsified at 45-50°C (oil), 25-30°C (water).
6. At the start of emulsification, the hot plate is turned up so heating continues during emulsification.
7. After 10 minutes, the pH is adjusted to 8.25 with 20% sodium carbonate, the mixing speed is reduced to 2000 rpm, and a solution of melamine-formaldehyde prepolymer is slowly added which is prepared by dispersing 3.9 g melamine in 44 g water, adding 6.5 g formaldehyde solution (37%) and heating at 60°C until the solution clears plus 30 minutes.
8. The pH is adjusted to 6.0, the beaker is covered with foil and placed in a water bath to bring the temperature of the preparation to 65°C. When 65°C is reached, the hot plate is adjusted to maintain this temperature for a two hour cure time during which the capsule walls are formed.
9. After curing, mixing speed is reduced to 600 rpm, formaldehyude scanvenger solution (7.7 g urea and 7.0 g water) is added and the solution was cured another 40 minutes.
10. The pH is adjusted to 9.5 using a 20% NaOH solution and stirred overnight at room temperature.

Three batches of microcapsules were prepared as above for use in a full color imaging sheet using the three internal phase compositions set forth below.

| Yellow Forming Capsules (420 nm) | |
|---|---|
| TMPTA | 35 g |
| DPHPA | 15 g |
| 3-Thenoyl-7-diethylamino coumarin | 15 g |
| 2-Mercaptobenzoxazole (MBO) | 2.0 g |
| 2,6-Diisopropylaniline | 1.0 g |
| Reakt Yellow (BASF) | 5.0 g |
| N-100(Desmodur Polyisocyanate Resin) | 3.33 g |

| Magenta Forming Capsules (550 nm) | |
|---|---|
| TMPTA | 50 g |
| Compound 8A | 0.2 g |
| 2,6-Diisopropylaniline | 2.0 g |
| HD5100 (Magenta color precursor from Hilton-Davis Chemical Co.) | 12.0 g |

| Cyan Forming Capsules (650 nm) | |
|---|---|
| TMPTA | 50 g |
| Compound 11 H | 0.31 g |
| 2,6-diisopropylaniline | 2.0 g |
| Cyan Precursor (CP-177 of Hilton-Davis Chemical Co.) | 6 g |

The three batches of microcapsules were blended together and coated on a support to provide an imaging material in accordance with the present invention.

## Claims

**1.** A cationic dye-borate anion compound represented by the formula (I):

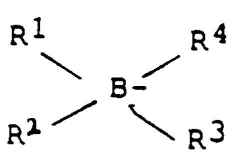

D+

(I)

where D is a cationic dye moiety; $R^1$ is an alkyl group and $R^2$, $R^3$, and $R^4$ are aryl groups.

**2.** A compound according to claim 1 wherein said cationic dye is selected from cationic methine, polymethine, triaryl methane, indoline, azine, thiazine, xanthene, oxazine, and acridine dyes.

**3.** A compound according to claim 2 wherein said cationic dye is selected from cationic cyanine, carbocyanine, hemicyanine, rhodamine, and azamethine dyes.

**4.** A compound according to claim 1 wherein said cationic dye is represented by the formula

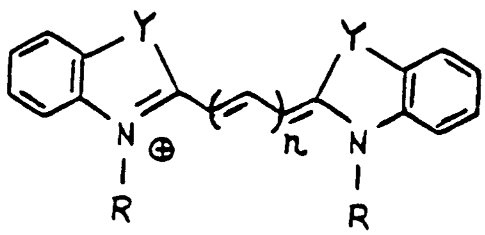

(II)

where n is O, 1, 2, or 3, R is an alkyl group, and Y is —CH=CH—, N-$CH_3$, $C(CH_3)_2$, O, S or Se.

**5.** A compound according to any preceding claim which generates a free radical upon exposure to actinic radiation.

**6.** A compound according to any previous claim which is dark stable.

**7.** A compound according to any preceding claim wherein $R^1$ is a butyl group.

**8.** A compound according to claim 7 where $R^2$, $R^3$ and $R^4$ are phenyl groups.

**9.** A compound according to claim 7 wherein $R^2$, $R^3$ and $R^4$ are anisyl groups.

**10.** A compound according to claim 1 having the formula

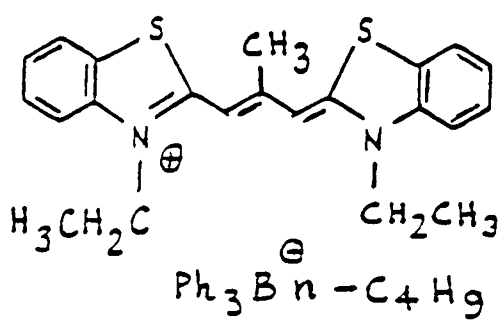

**11.** A compound according to claim 1 having the formula

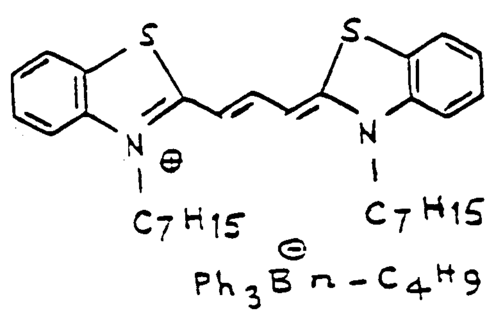

**12.** A compound according to claim 1 having the formula

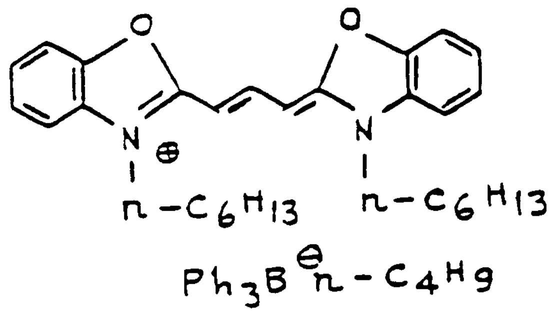

**13.** A compound according to claim 1 having the formula

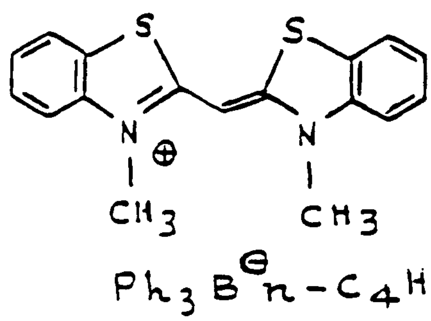

**14.** A compound according to claim 1 having the formula

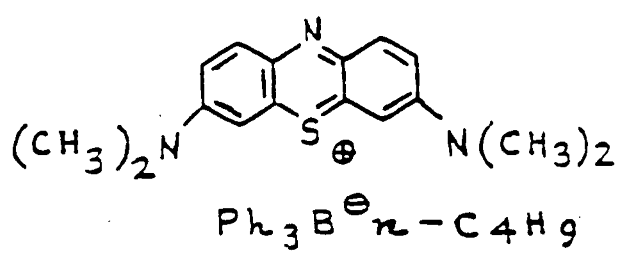

**15.** A compound according to claim 1 having the formula

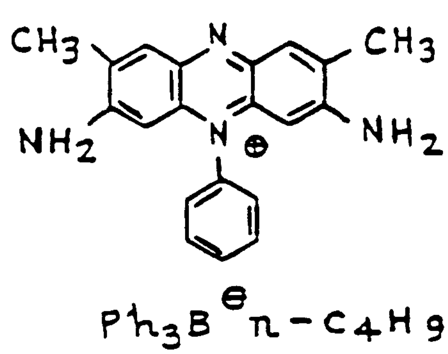

**16.** A compound according to claim 1 having the formula

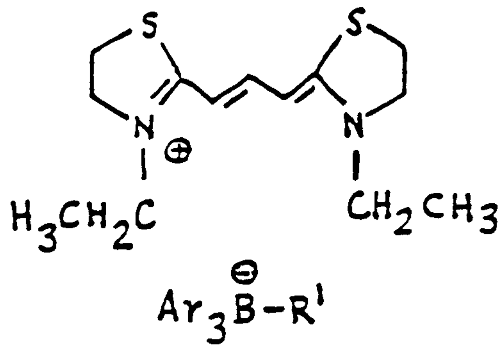

where R′ is n-butyl and Ar is phenyl,
where R′ is n-hexyl and Ar is phenyl, or
where R′ is n-butyl and Ar is anisyl.

**17.** A compound according to claim 1 having the formula

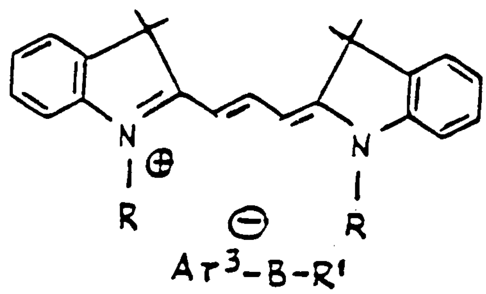

when R is methyl and R′ is n-butyl and Ar is phenyl,
when R is methyl and R′ is n-hexyl and Ar is phenyl,
when R is n-butyl and R′ is n-butyl and Ar is phenyl,
when R is n-butyl and R′ is n-hexyl and Ar is phenyl,
when R is n-heptyl and R′ is n-butyl and Ar is phenyl,
when R is n-heptyl and R′ is n-hexyl and Ar is phenyl, or
when R is ethyl and R′ is n-butyl and Ar is phenyl.

**18.** A compound according to claim 1 having the formula

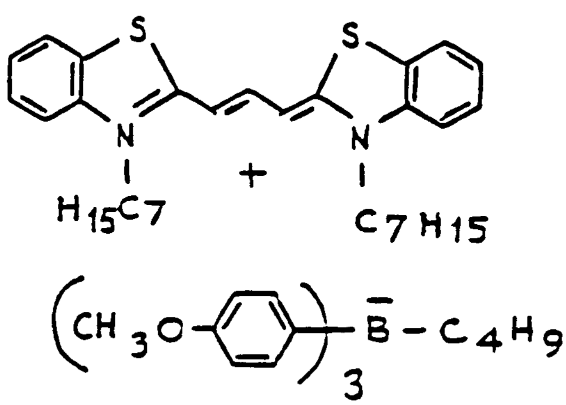

**19.** A compound according to claim 1 having the formula

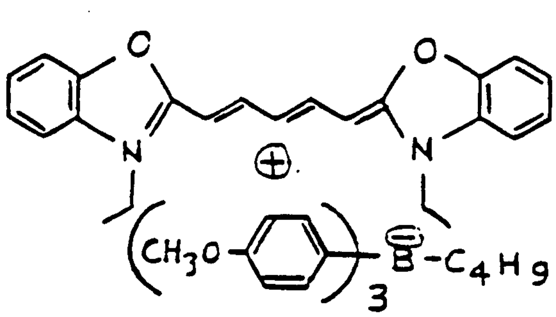

**20.** A compound according to claim 1 having the formula

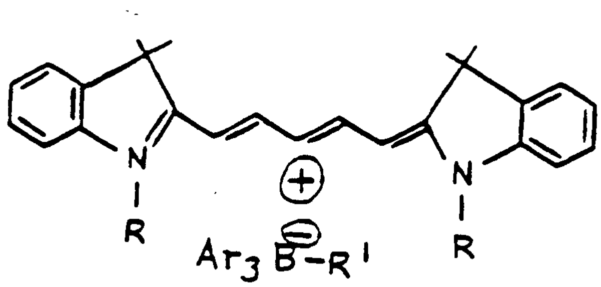

where R is methyl and R′ is n-butyl and Ar is phenyl,
where R is methyl and R′ is n-hexyl and Ar is phenyl,
where R is n-butyl and R′ is n-butyl and Ar is phenyl,
where R is n-butyl and R′ is n-hexyl and Ar is phenyl,
where R is n-pentyl and R′ is n-butyl and Ar is phenyl,
where R is n-pentyl and R′ is n-hexyl and Ar is phenyl,
where R is n-heptyl and R′ is n-butyl and Ar is phenyl,
where R is n-heptyl and R′ is n-hexyl and Ar is phenyl or
where R is methyl and R′ is n-butyl and Ar is anisyl.

**21.** A compound according to claim 1 having the formula

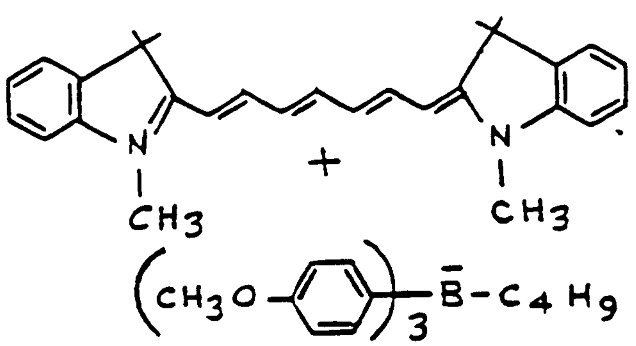

## Patentansprüche

1. Kationische Farbstoff/Boratanion-Verbindung gemäß der Formel (I):

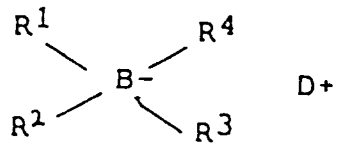

(I)

in der D eine kationische Farbstoffspezies ist, $R^1$ eine Alkylgruppe bedeutet und $R^2$, $R^3$ und $R^4$ Arylgruppen bedeuten.

2. Verbindung nach Anspruch 1, in der der kationische Farbstoff ausgewählt ist unter kationischen Methin-, Polymethin-, Triarylmethan-, Indolin-, Azin-, Thiazin-, Xanthen-, Oxazin- und Acridinfarbstoffen.

3. Verbindung nach Anspruch 2, in der der kationische Farbstoff ausgewählt ist aus kationischen Cyanin-, Carbocyanin-, Hemicyanin-, Rhodamin- und Azamethinfarbstoffen.

4. Verbindung nach Anspruch 1, in der der kationische Farbstoff dargestellt wird durch die Formel

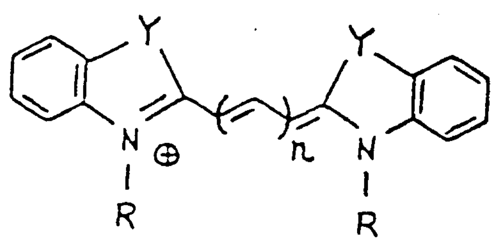

(II)

in der n 0, 1, 2 oder 3 ist, R eine Alkylgruppe bedeutet und Y $-CH=CH-$, $N-CH_3$, $C(CH_3)_2$, O, S oder Se ist.

5. Verbindung nach einem der vorangehenden Ansprüche, die ein freies Radikal erzeugt, wenn Sie aktinischer Strahlung ausgesetzt wird.

6. Verbindung nach einem der vorangehenden Ansprüche, die im Dunkeln stabil ist.

7. Verbindung nach einem der vorangehenden Ansprüche, in der $R^1$ eine Butylgruppe ist.

8. Verbindung nach Anspruch 7, in der $R^2$, $R^3$ und $R^4$ Phenylgruppen sind.

9. Verbindung nach Anspruch 7, in der $R^2$, $R^3$ und $R^4$ Anisylgruppen sind.

**10.** Verbindung nach Anspruch 1 mit der Formel

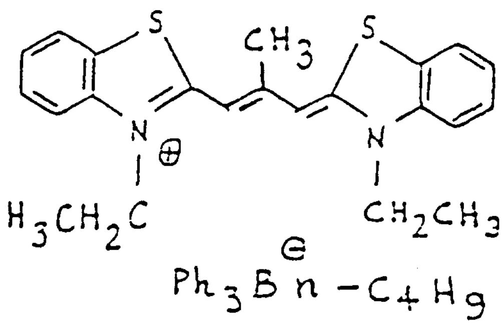

**11.** Verbindung nach Anspruch 1 mit der Formel

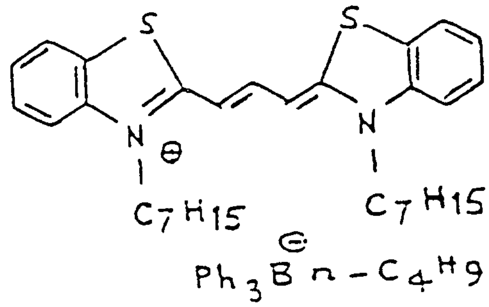

**12.** Verbindung nach Anspruch 1 mit der Formel

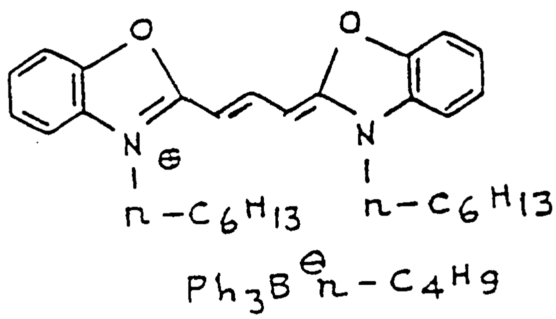

13. Verbindung nach Anspruch 1 mit der Formel

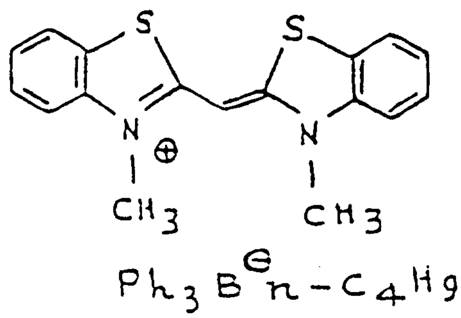

14. Verbindung nach Anspruch 1 mit der Formel

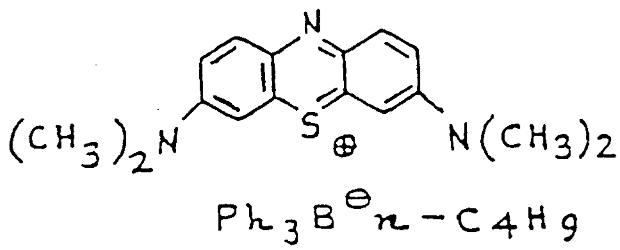

15. Verbindung nach Anspruch 1 mit der Formel

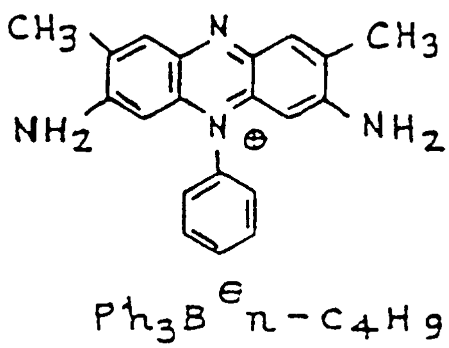

**16.** Verbindung nach Anspruch 1 mit der Formel

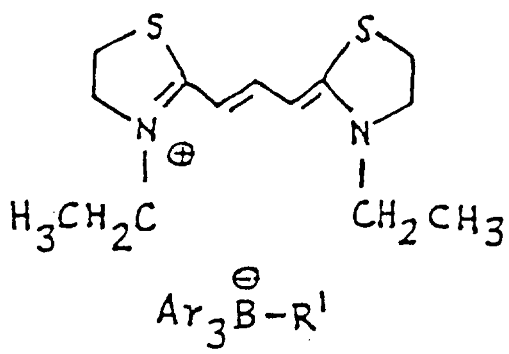

in der R' n-Butyl und Ar Phenyl ist,
in der R' n-Hexyl und Ar Phenyl ist, oder
in der R' n-Butyl und Ar Anisyl.

**17.** Verbindung nach Anspruch 1 mit der Formel

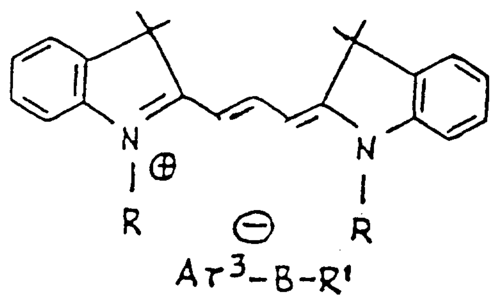

in der
R Methyl, R' n-Butyl und Ar Phenyl,
R Methyl, R' n-Hexyl und Ar Phenyl,
R n-Butyl, R' n-Butyl und Ar Phenyl,
R n-Butyl, R' n-Hexyl und Ar Phenyl,
R n-Heptyl, R' n-Butyl und Ar Phenyl,
R n-Heptyl, R' n-Hexyl und Ar Phenyl oder
R Ethyl, R' n-Butyl und Ar Phenyl ist.

**18.** Verbindung nach Anspruch 1 mit der Formel

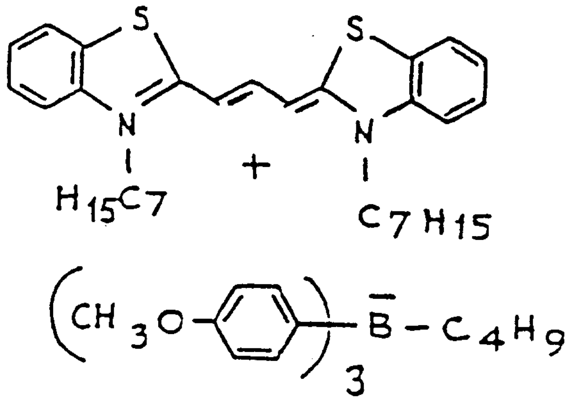

**19.** Verbindung nach Anspruch 1 mit der Formel

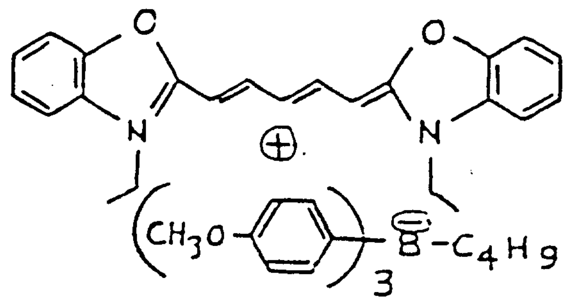

**20.** Verbindung nach Anspruch 1 mit der Formel

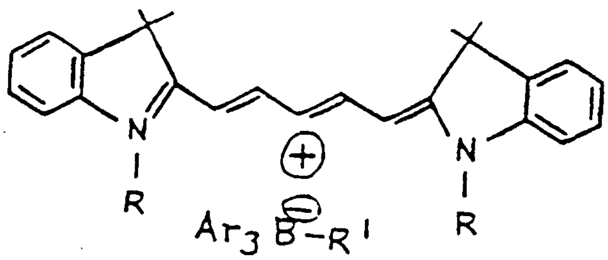

in der

R Methyl, R' n-Butyl und Ar Phenyl,
R Methyl, R' n-Hexyl und Ar Phenyl,
R n-Butyl, R' n-Butyl und Ar Phenyl,
R n-Butyl , R' n-Hexyl und Ar Phenyl,
R n-Pentyl, R' n-Butyl und Ar Phenyl,
R n-Pentyl, R' n-Hexyl und Ar Phenyl,
R n-Heptyl, R' n-Butyl und Ar Phenyl,
R n-Heptyl, R' n-Hexyl und Ar Phenyl oder
R methyl, R' n-Butyl und Ar Anisyl ist.

**21.** Verbindung nach Anspruch 1 mit der Formel

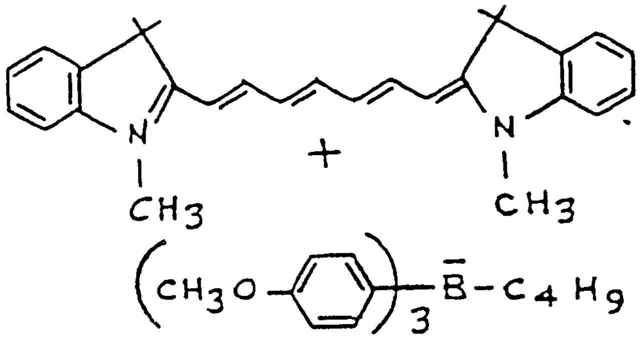

## Revendications

1. Composé de colorant cationique d'anion borate représenté par la formule (I) :

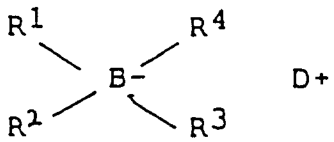

(I)

où D est une partie de colorant cationique; $R^1$ est un groupe alkyle et $R^2$, $R^3$ et $R^4$ sont des groupes aryle.

2. Composé selon la revendication 1, dans lequel ledit colorant cationique est choisi parmi les colorants au méthine, polyméthine, méthane triaryle, indoline, azine, thiazine, xanthène, oxazine et acridine carioniques.

3. Composé selon la revendication 2, dans lequel ledit colorant cationique est choisi parmi les colorants à la cyanine, carbocyanine, hemicyanine, rhodamine et azaméthine cationiques.

4. Composé selon la revendication 1, dans lequel ledit colorant cationique est représenté par la formule

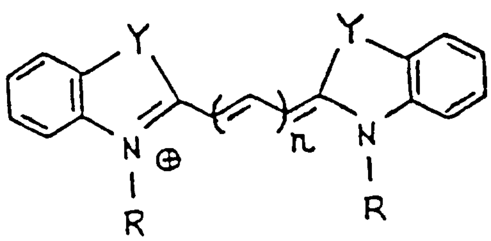

(II)

où n est 0, 1, 2 ou 3 ; R est un groupe alkyle, et Y est $-CH=CH-$, $N\text{-}CH_3$, $C(CH_3)_2$, O, S ou Se.

5. Composé selon l'une quelconque des revendications précédentes qui génère un radical libre sous l'effet d'une exposition à une radiation actinique.

6. Composé selon l'une quelconque des revendications précédentes qui est stable à l'obscurité.

7. Composé selon l'une quelconque des revendications précédentes, dans lequel $R^1$ est un groupe butyle.

8. Composé selon la revendication 7, où $R^2$, $R^3$ et $R^4$ sont des groupes phényle.

9. Composé selon la revendication 7, où $R^2$, $R^3$ et $R^4$ sont des groupes anisyle.

**10.** Composé selon la revendication 1 ayant la formule

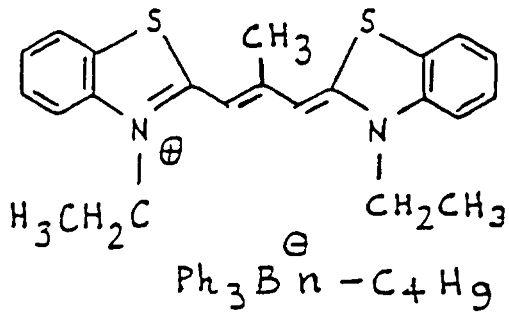

**11.** Composé selon la revendication 1 ayant la formule

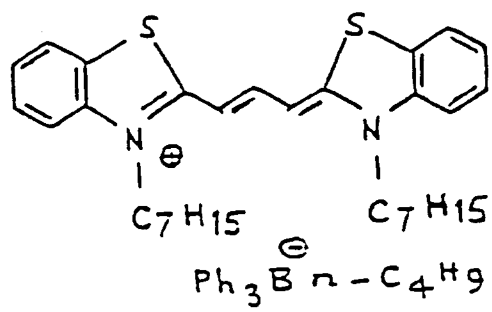

**12.** Composé selon la revendication 1 ayant la formule

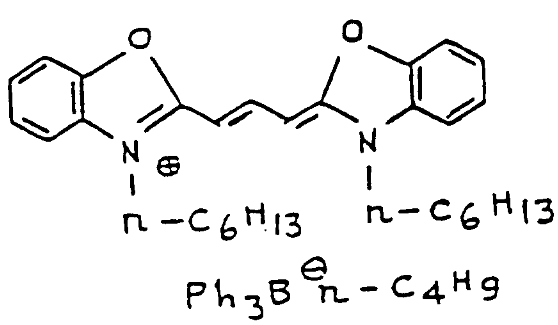

**13.** Composé selon la revendication 1 ayant la formule

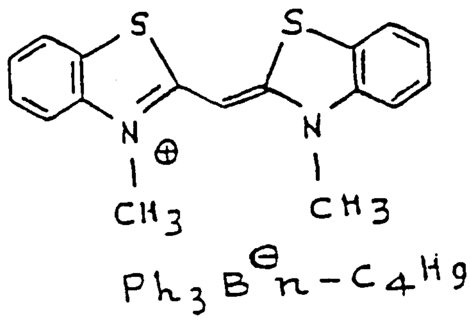

**14.** Composé selon la revendication 1 ayant la formule

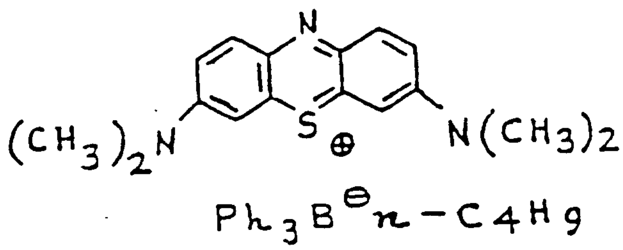

**15.** Composé selon la revendication 1 ayant la formule

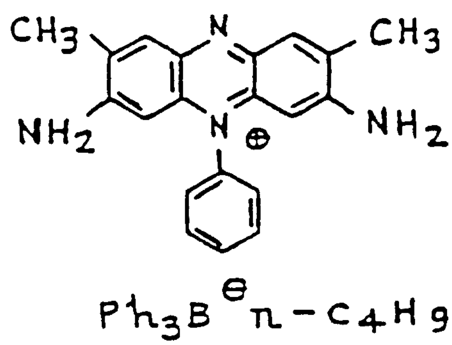

**16.** Composé selon la revendication 1 ayant la formule

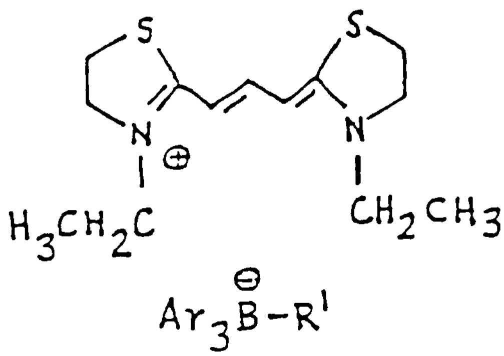

où R' est du n-butyle et Ar est du phényle,
où R' est du n-heptyle et Ar est du phényle, ou
où R' est du n-butyle et Ar est de l'anisyle.

**17.** Composé selon la revendication 1 ayant la formule

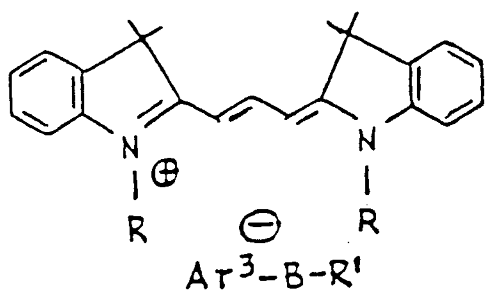

quand R est du méthyle et R' est du n-butyle et Ar est du phényle,
quand R est du méthyle et R' est du n-hexyle et Ar est du phényle,
quand R est du n-butyle et R' est du n-butyle et Ar est du phényle,
quand R est du n-butyle et R' est du n-hexyle et Ar est du phényle,
quand R est du n-heptyle et R' est du n-butyle et Ar est du phényle,
quand R est du n-heptyle et R' est du n-hexyle et Ar est du phényle, ou
quand R est de l'éthyle et R' est du n-butyle et Ar est du phényle,

**18.** Composé selon la revendication 1 ayant la formule

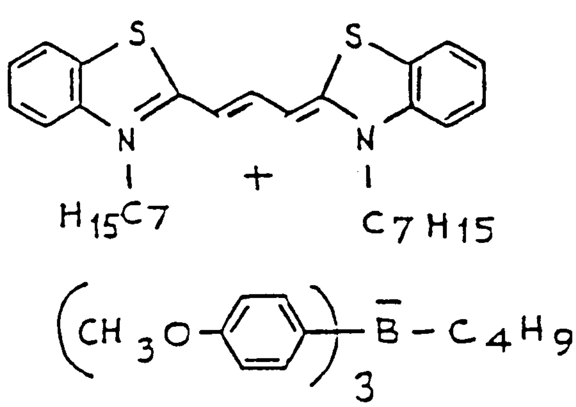

**19.** Composé selon la revendication 1 ayant la formule

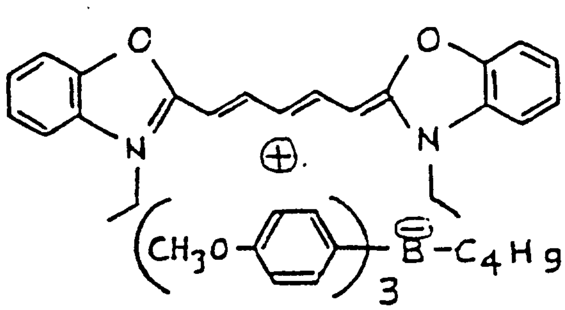

**20.** Composé selon la revendication 1 ayant la formule

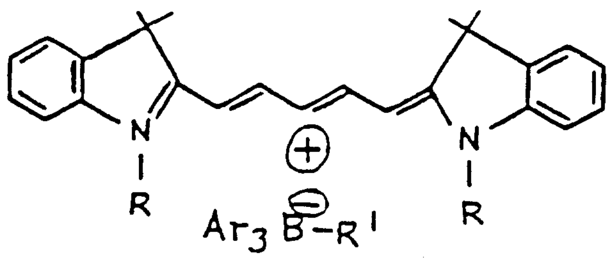

où R est du méthyle et R' est du n-butyle et Ar est du phényle,
où R est du méthyle et R' est du n-hexyle et Ar est du phényle,
où R est du n-butyle et R' est du n-butyle et Ar est du phényle,
où R est du n-butyle et R' est du n-hexyle et Ar est du phényle,
où R est du n-pentyle et R' est du n-butyle et Ar est du phényle,
où R est du n-pentyle et R' est du n-hexyle et Ar est du phényle,
où R est du n-heptyle et R' est du n-butyle et Ar est du phényle,
où R est du n-heptyle et R' est du n-hexyle et Ar est du phényle, ou
où R est du méthyle et R' est du n-butyle et Ar est de l'anisyle.

**21.** Composé selon la revendication 1 ayant la formule